**Europäisches Patentamt**

**European Patent Office**

**Office européen des brevets**

(19)

(11) Veröffentlichungsnummer: **0 192 980**
**B1**

(12) ## EUROPÄISCHE PATENTSCHRIFT

(45) Veröffentlichungstag der Patentschrift:
**14.06.89**

(51) Int. Cl.⁴: **F16J 1/02**, F02F 3/02

(21) Anmeldenummer: **86101114.6**

(22) Anmeldetag: **28.01.86**

(54) Leichter Tauchkolben für Verbrennungsmotoren.

(30) Priorität: **14.02.85 DE 3505037**

(43) Veröffentlichungstag der Anmeldung:
**03.09.86 Patentblatt 86/36**

(45) Bekanntmachung des Hinweises auf die Patenterteilung:
**14.06.89 Patentblatt 89/24**

(84) Benannte Vertragsstaaten:
**DE FR GB IT**

(56) Entgegenhaltungen:
**EP-A- 0 050 256**
**FR-A- 1 081 089**
**US-A- 1 498 689**

(73) Patentinhaber: **MAHLE GMBH,**
**Pragstrasse 26-46 Postfach 50 07 69,**
**D-7000 Stuttgart 50(DE)**

(72) Erfinder: **Ripberger, Emil, Brunnenstrasse 6,**
**D-7148 Remseck 3(DE)**
Erfinder: **Stuska, Gotthard, Saarstrasse 34,**
**D-7050 Waiblingen(DE)**

## Beschreibung

Die Erfindung betrifft einen leichten Tauchkolben für Verbrennungsmotoren nach dem Oberbegriff des Anspruchs 1.

Ein solcher Kolben ist aus der EP 0 050 256 A1 bekannt.

Es ist Aufgabe der vorliegenden Erfindung, die im Schaftbereich jenes bekannten Kolbens bereits vorhandene Flexibilität bei Aufrechterhaltung einer guten Seitenführung des Kolbens in Richtung der Kolbenbolzenachse noch weiter zu erhöhen.

Gelöst wird diese Aufgabe durch eine Ausbildung des Kolbenschaftes nach den kennzeichnenden Merkmalen des Anspruchs 1.

Zweckmäßige Ausgestaltungen der Erfindung enthalten die Unteransprüche. Durch den seitlichen Randeinzug an den Schaft-Führungsplatten nach Anspruch 2 wird ein hartes Anlaufen der seitlichen Führungsplattenränder an die Zylinderlauffläche vermieden.

Die auf einer der Tragseiten des Schaftes mittig zwischen den Bolzennaben an die Ringpartie des Kolbenkopfes angeformte einzelne Führungsplatte wird durch den im Inneren an sie angeformten Metallstreifen nach Anspruch 3 versteift.

Bei Verwendung eines Metallstreifens aus einem Material mit geringerer Wärmeausdehnung als derjenigen des Kolbengrundmaterials gem. Anspruch 4 wird durch den Metallstreifen ein Regeleffekt bei der betreffenden Führungsplatte erreicht. Dieser Regeleffekt wirkt dahingehend, daß das untere Ende der betreffenden Führungsplatte bei steigender Temperatur radial nach innen eingezogen wird.

Ein Ausführungsbeispiel der Erfindung ist in der Zeichnung dargestellt. Und zwar zeigen:

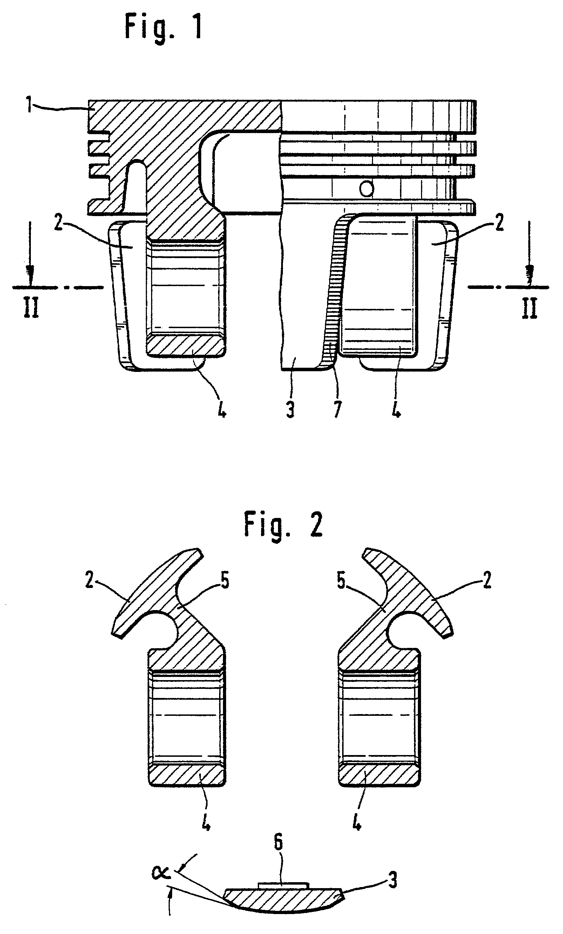

Fig. 1 einen Kolben zum Teil im Schnitt (linker Teil) und zum Teil in der Ansicht (rechter Teil),

Fig. 2 einen Schnitt durch den Kolben nach Linie II-II

Der Kolben ist aus Aluminium und besteht im wesentlichen aus dem Kopfteil 1 mit Ringpartie und den Führungsplatten 2, 3 im Schaftbereich sowie den am Kolbenboden frei angehängten Bolzennaben 4. Mit dem Kolbenoberteil stehen die Führungsplatten 2 lediglich über die von den Bolzennaben 4 ausgehenden Rippen 5 in Verbindung. Die Rippen 5 sind zur Bolzenachse in einem Winkel von 45° mit Scheitelpunkt in der Kolbenachse angeordnet. Damit liegen die Rippen 5 auf der 45° Diagonalebene zwischen Bolzen- und Pleuelschwingebene. Die Anordung der Rippen 5 unter einem solchen Winkel sorgt beim erfindungsgemäßen Kolben für ausgezeichnete Laufergebnisse. Die Führungsplatten 2 sind in Umfangsrichtung flächenmäßig symmetrisch zu der 45° Diagonalebene und damit gleichfalls zu den Rippen 5. An ihrem oberen Ende überspannen die Führungsplatten 2 je einen Winkel von etwa 40°. Nach unten verjüngen sich die Führungsplatten 2 und zwar auf ihren beiden Längsseiten jeweils unter einem Winkel von 10°. Eine derart sich nach unten verjüngende Flächenausbildung erweist sich in bezug auf Gewichtseinsparung und Laufverhalten des Kolbens als besonders günstig. Die Führungsplatten 2 sind mit Abstand unterhalb des untersten Ringsteges der Ringpartie angeordnet.

Während die Führungsplatten 2 bevorzugt auf der Druckseite des Kolbens angeordnet sind, ist an der Gegendruckseite des Kolbens lediglich eine direkt an den Kolbenkopf angeformte Führungsplatte 3 vorgesehen. Die Breite der Führungsplatte 3 in Umfangsrichtung verjüngt sich ebenfalls ähnlich wie bei den Führungsplatten 2 zum unteren Ende des Kolbens hin. Am oberen Ende erstreckt sich diese Führungsplatte über einen Winkel von 50°, der zum unteren Ende auf 40° abnimmt.

In Kolbenlängsrichtung ist im Inneren der Führungsplatte 3 ein Metallstreifen 6 eingeformt, der im Kolbenkopfteil 1 bis an die Unterseite des Kolbenbodens reicht. Der Metallstreifen 6 bewirkt, wenn er aus einem Material ist, dessen Wärmeausdehnungskoeffizient gegenüber demjenigen von Aluminium kleiner ist, einen Regeleffekt bei der Führungsplatte 3 dahingehend, daß sich das untere Ende der Führungsplatte 3 mit steigender Temperatur radial nach innen einzieht.

Die schraffierten Seitenbereiche 7 der Führungsplatte sind unter einem Winkel von $\alpha = 4°$ radial nach innen eingezogen und zwar derart, daß die Seitenkante der Führungsfläche aus dessen Hauptlauffläche um 100 µm zurückgesetzt ist.

## Patentansprüche

1. Leichter Tauchkolben, insbesondere aus Leichtmetall, für Verbrennungsmotoren mit frei am Kolbenboden angehängten Bolzennaben (4) und einem Schaft, der bis auf einen schmalen Ringsteg unterhalb der untersten oberhalb der Nabenbohrungen liegenden Kolbenringnut lediglich aus einzelne Teilbereiche des Kolbenumfangs abdeckenden Segmenten besteht, gekennzeichnet durch die Merkmale,

– auf einer der Tragseiten des Kolbens sind als Schaftelemente zwei jeweils nur über eine in Kolbenlängsrichtung verlaufende Rippe (5) an die benachbarte Bolzennabe (4) angebundene Führungsplatten (2) mit an die Zylinderlauffläche angepaßten Außenflächen vorgesehen, die sich umfangsmäßig von der zwischen Bolzen- und Pleuelschwingebene unter 45 Grad liegenden Diagonalebene aus gesehen jeweils um etwa 15–25 Grad zu beiden Seiten erstrecken, wobei die Bolzenebene von der Kolbenbolzen- und der Kolbenlängsachse und die Pleuelschwingebene senkrecht dazu von der Kolbenlängsachse aufgespannt sind,

– auf der gegenüberliegenden Tragseite ist als Schaftelement eine einzige Führungsplatte (3) an den Ringpartieabschnitt des Kolbenkopteils (1) über den schmalen unterhalb der untersten Ringnut liegenden Ringsteg hinaus angeformt, die in Kolbenlängsrichtung mindestens bis zur Höhe der Kolbenbolzenachse reicht und sich umfangsmäßig 10 Grad bis 25 Grad zu jeder Seite der Pleuelschwingebene erstreckt.

2. Leichter Tauchkolben nach Anspruch 1, dadurch gekennzeichnet, daß die Lauffläche der Führungsplatten (2, 3) in Umfangsrichtung zu beiden Seitenrändern (7) hin unter einem Winkel von 2 - 5° auf einer radialen Tiefe von 50 - 150µm an den betreffenden Seitenkanten nach innen eingezogen sind.

3. Leichter Tauchkolben nach Anspruch 1 oder 2, dadurch gekennzeichnet, daß auf der Innenseite der auf einer der Tragseiten angeordneten einzelnen Führungsplatten (3) ein sich in Längsrichtung erstreckender Metallstreifen (6) aus gegenüber dem Kolbengrundwerkstoff festigkeitsmäßig höherem Material an- und/oder eingeformt ist.

4. Leichter Tauchkolben nach einem der vorhergehenden Ansprüche, dadurch gekennzeichnet, daß der Wärmeausdehnungskoeffizient des Metallstreifens geringer ist als derjenige des Kolbengrundwerkstoffes.

## Claims

1. Lightweight plunger piston, particularly of light metal, for internal combustion engines, with gudgeon pin bosses (4) freely attached to the piston crown, and with a stem which, apart from a narrow annular web beneath the lowest piston ring groove which is above the gudgeon pin boss bores, consists solely of segments which cover individual partial portions of the piston periphery, characterised by the following features:
– on one of the bearing sides of the pistons there are, as shank elements, guide plates (2) having outer surfaces adapted to the cylinder working surface and connected to the adjacent gudgeon pin boss (4) by, in each case, only one rib (5) which extends in the longitudinal direction of the piston, said outer surfaces extending peripherally to either side by about 15–25 degrees, as viewed from the diagonal plane located at 45 degrees between the oscillation plane of the gudgeon pin and the connecting rod, the gudgeon pin plane stretching from the longitudinal axis of the gudgeon pin and of the piston while the oscillation plane of the connecting rod stretches from and at a right-angle to the longitudinal axis of the piston,
– integrally formed as a shank element, there is on the opposite bearing side a single guide plate (3) on the ring portion of the piston head part (1) above the narrow ring and below the lowest piston ring groove, said guide plate extending in the longitudinal direction of the piston at least as far as the height of the gudgeon pin axis and in a peripheral direction for 10 to 25 degrees to either side of the connecting rod oscillation plane.

2. Lightweight plunger piston according to Claim 1, characterised in that in the peripheral direction, the working surfaces of the guide plates (2, 3) are tapered inwardly towards the two lateral edges (7) at an angle of 2–5° over a radial depth of 50–150 µm at the relevant lateral edges.

3. Lightweigt plunger piston according to Claim 1 or 2, characterised in that on the inside of the single guide plate (3) which is disposed on one of the bearing sides, there is a longitudinally extending metal strip (6) which consists of a material of greater strength than the basic material of the piston.

4. Lightweight plunger piston according to one of the preceding Claims, characterised in that the heat expansion coefficient of the metal strip is lower than that of the basic piston material.

## Revendications

1. Piston léger, en particulier en alliage léger pour moteurs à combustion interne, comportant des paliers (4) d'axe pendant librement du plateau de piston et un fût qui, à l'exception d'une barrette annulaire étroite située sous la gorge de segment de piston située le plus en bas au-dessus des alésages de palier, n'est constitué que par des segments individuels couvrant des zones partielles de la périphérie du piston, caractérisé par les caractéristiques suivantes:
– sur un des côtés d'appui du piston sont prévues en tant qu'éléments de fût, deux plaques de guidage (2) reliées par l'intermédiaire d'une nervure (5) s'étendant, dans le sens longitudinal du piston, au palier (4) d'axe voisin, comportant des surfaces extérieures adaptées à la surface de glissement du cylindre, qui s'étendent des deux côtés sur environ 15 à 25° dans le sens périphérique vu du plan diagonal situé à 45° entre le plan de l'axe et le plan de débattement de la bielle, le plan de l'axe contenant l'axe géométrique de l'axe de piston et l'axe longitudinal du piston, et le plan de débattement, perpendiculaire à celui-ci, contenant l'axe longitudinal du piston,
– sur le côté d'appui situé à l'opposé est formée, en tant qu'élément de fût, une plaque de guidage unique (3) contre la section de la partie annulaire de la partie formant la tête (1) de piston au-delà de la barrette annulaire étroite située en-dessous de la gorge de segment située le plus en bas, laquelle s'étend, dans le sens longitudinal du piston, au moins jusqu'à la hauteur de l'axe géométrique de l'axe de piston et circonférentiellement sur 10 à 25° de chaque côté du plan de débattement de la bielle.

2. Piston léger selon la revendication 1, caractérisé en ce que les surfaces de glissement des plaques de guidage (2, 3) sont rentrées vers l'intérieur, dans le sens périphérique, en direction des deux bords latéraux (7) selon un angle de 2 à 5° sur une profondeur radiale de 50 à 150 µm aux bords latéraux concernés.

3. Piston léger selon la revendication 1 ou 2, caractérisé en ce que le côté intérieur de la plaque de guidage unique (3), disposée sur un des côtés d'appui, est formée une bande de métal (6), s'étendant dans le sens longitudinal, en une matière supérieure en ce qui concerne la solidité par rapport au matériau de base du piston.

4. Piston léger selon l'une quelconque des revendications précédentes, caractérisé en ce que le coefficient de dilatation thermique de la bande de métal est plus faible que celui du matériau de base du piston.

# Fig. 1

# Fig. 2